# DEMANDE DE BREVET EUROPEEN

(11) **EP 4 729 978 A1**
(43) Date de publication de la demande: **22.04.2026**
(21) Numéro de dépôt: 25208103.9
(22) Date de dépôt: 10.10.2025
(51) Int. Cl.: G01S 7/03, G01S 13/88, H01Q 1/52, H01Q 3/26, H01Q 3/28, H01Q 9/28

(54) **ANTENNE POUR RADAR À IMPULSIONS**

(30) Priorité: 15.10.2024 FR 2411175
(71) Demandeur: Commissariat à l'Energie Atomique et aux Energies Alternatives, 75015 Paris (FR)
(72) Inventeur: JAAFAR, Hussein, 38054 GRENOBLE Cedex 9 (FR); BORIES, Serge, 38054 GRENOBLE Cedex 9 (FR); D'ERRICO, Raffaele, 38054 GRENOBLE Cedex 9 (FR)
(74) Mandataire: Germain Maureau

(57) **Abrégé**

Antenne pour un radar à impulsions, l'antenne comprenant :
- une partie fonctionnelle d'antenne comprenant une portion conductrice, et une portion résistive, la partie fonctionnelle d'antenne étant apte à occuper un premier état électrique dans lequel la portion résistive présente une première valeur de résistance électrique, et au moins un deuxième état électrique dans lequel la portion résistive présente une deuxième valeur de résistance électrique supérieure à ladite première valeur de résistance électrique;
- Un mécanisme de commande apte à occuper une première position amenant la partie fonctionnelle d'antenne à occuper le premier état électrique, et au moins une deuxième position amenant la partie fonctionnelle d'antenne à occuper l'au moins un deuxième état électrique.

## Description

### Domaine technique

La présente invention, qui appartient au domaine des équipements radio à bandes ultra-larges, concerne en particulier une antenne d'un type nouveau utilisable au sein d'un système radar à impulsions. La présente invention concerne également différents systèmes radar à impulsions comprenant au moins une antenne conforme à l'invention.

### Préambule

Parmi les systèmes à bandes ultra-larges (UWB pour « *ultra wideband* » en terminologie anglaise), on distingue les radars à pénétration de sol (RPS) ou radars pénétrants dans le sol (GPR pour « *Ground Penetrating Radar* » en terminologie anglaise) encore désignés communément en français par radar de sol, lesquels utilisent le principe des systèmes radar à impulsions pour sonder et imager le sol afin d'y détecter la présence de cibles enfouies à différentes profondeurs telles que des canalisations, des cavités naturelles, des tunnels, des engins explosifs, des éléments archéologiques ou encore certains minéraux.

Un système radar à impulsions comprend un dispositif émetteur apte à émettre notamment vers une cible un rayonnement électromagnétique suite à une excitation du système radar à impulsions par un signal électrique composé d'au moins une impulsion électrique de très courte durée, et un dispositif récepteur (parfois confondu avec le dispositif émetteur dans le cas d'un radar mono statique, par opposition au radar bi statique qui comprend un dispositif récepteur distinct du dispositif émetteur) notamment apte à recevoir en provenance de ladite cible le rayonnement électromagnétique de réponse, c'est-à-dire le rayonnement électromagnétique résultant de la réflexion sur la cible du rayonnement électromagnétique émis par le dispositif émetteur.

Un dispositif émetteur d'un radar de sol bi statique comprend généralement au moins une antenne émettrice, laquelle est couplée à au moins une antenne réceptrice appartenant au dispositif récepteur dudit radar de sol bi statique et disposée en général à proximité de l'au moins une antenne émettrice.

L'antenne émettrice, convenablement excitée par un signal électrique composé d'une impulsion de très courte durée, ou signal impulsionnel, émet un rayonnement sous la forme d'une onde électromagnétique en direction du sol notamment, laquelle est successivement (1) directement reçue par l'antenne réceptrice (« *cross coupling »* ou *« direct coupling »* pour couplage croisé ou couplage direct), (2) réfléchie sur la surface du sol puis reçue par l'antenne réceptrice (« *front surface reflection* » pour écho de la surface du sol) et (3) réfléchie sur une cible puis reçue par l'antenne réceptrice (« *target reflection* » ou « *target echo* » pour écho de la cible).

L'onde électromagnétique composite reçue par l'antenne réceptrice est ensuite convertie en un signal électrique de réponse, également désigné par réponse impulsionnelle du radar de sol, qui représente successivement, dans le domaine temporel, le couplage direct (ou couplage croisé) des antennes, l'écho de la surface du sol et enfin l'écho de la cible. Après sa réception, une analyse de la réponse impulsionnelle est réalisée afin de déterminer par exemple la nature, la localisation ou encore l'orientation de la cible.

Afin de garantir un fonctionnement efficace du radar de sol, l'antenne émettrice et l'antenne réceptrice sont disposées à proximité immédiate de la surface du sol, ce qui fait que la partie de l'onde électromagnétique composite correspondant à l'écho de la surface du sol est généralement reçue par l'antenne réceptrice immédiatement après la partie de l'onde électromagnétique composite correspondant au couplage direct.

De plus, le temps écoulé entre la réception de la partie de l'onde électromagnétique composite correspondant à l'écho de la surface du sol et la réception de la partie de l'onde électromagnétique composite correspondant à l'écho de la cible dépend de la distance entre la cible et la paire d'antennes émettrice et réceptrice, et est d'autant plus court que la cible est proche des antennes.

Dans le domaine temporel, la partie de la réponse impulsionnelle correspondant à l'écho d'une cible située à une faible profondeur est donc très rapprochée de la partie de la réponse impulsionnelle correspondant au couplage direct ou croisé et à l'écho de la surface du sol, ce qui rend difficile, voire empêche dans certain cas, la détection d'une telle cible peu profonde puisque la partie de la réponse impulsionnelle correspondant à son écho peut passer inaperçue, étant masquée par la partie de la réponse impulsionnelle correspondant au couplage direct et à l'écho de la surface du sol.

La probabilité de ne pas remarquer l'écho de la cible, et donc de ne pas détecter cette dernière, est d'autant plus importante que la réponse impulsionnelle est en outre perturbée par des échos indésirables résultant notamment du couplage direct (« *time-domain ringing* » en terminologie anglaise), lesquels sont reçus immédiatement après le couplage direct des antennes, ou encore par des échos non significatifs en provenance du sol (« *radar clutter* » en terminologie anglaise), lesquels sont par exemple dus à la présence de cailloux dans le sol ou à un sol à la composition particulièrement hétérogène.

Il convient donc de procéder à une élimination, ou à tout le moins à une réduction desdits échos indésirables et/ou peu significatifs (« *time-domain clutter reduction* » ou « *time-domain ringing reduction* » en terminologie anglaise) afin de permettre une détection systématique et efficace de cibles enfouies peu profondément.

Pour ce faire, il est notamment connu d'intégrer des éléments électriquement résistifs au sein de la structure interne de l'antenne afin de produire une antenne particulièrement adaptée à la détection de cibles peu profondément enfouies dans le sol.

Cependant, une telle antenne présente une efficacité de rayonnement moins élevée, et donc une capacité de pénétration dans le sol réduite. Ainsi, une telle antenne, adaptée à la détection de cibles peu profondément enfouies, n'est pas adaptée à la détection de cibles profondément enfouies, puisque l'onde électromagnétique émise par une telle antenne n'atteindra probablement pas de telles cibles et/ou ne produira pas un écho de cible d'intensité suffisante pour pouvoir être détecté.

En effet, une antenne apte à détecter des cibles profondément enfouies dans le sol doit émettre un rayonnement d'intensité suffisante pour pouvoir atteindre la profondeur nécessaire à la détection de telles cibles. Une telle antenne doit donc présenter une efficacité de rayonnement élevée, et il n'est donc pas opportun d'intégrer dans sa structure interne des éléments résistifs.

Parmi les antennes utilisées dans les systèmes de radar de sol, on distingue donc deux types d'antennes structurellement différentes : les antennes spécifiquement dédiées à la détection de cibles situées à de faibles profondeurs (détection peu profonde ou « *shallow target detection* », en terminologie anglaise) et les antennes spécifiquement dédiées à la détection de cibles situées à des profondeurs importantes (détection profonde ou « *profound target detection* » en terminologie anglaise).

Pour être capable de sonder efficacement le sol à différentes profondeurs, un système radar à impulsions doit donc théoriquement comprendre au moins une antenne de chacun des deux types précités, ce qui rend un tel système complexe structurellement et coûteux financièrement de par le nombre d'antennes utilisées, et ce sans pour autant garantir une efficacité de fonctionnement élevée (puisque seule une partie des antennes serait utilement dédiée à chacun des deux types de détection profonde/peu profonde).

### Résumé de l'invention

L'invention vise à remédier à tout ou partie des inconvénients précités.

En particulier, l'invention porte, selon un premier aspect, sur une antenne pour un radar, l'antenne comprenant :
- une partie fonctionnelle d'antenne comprenant une portion conductrice, et une portion résistive présentant une résistance électrique, la partie fonctionnelle d'antenne étant apte à réaliser :
   - un premier état électrique de partie fonctionnelle dans lequel la portion résistive présente une première valeur faible de résistance électrique de portion résistive ;
   - au moins un deuxième état électrique de partie fonctionnelle dans lequel la portion résistive présente une deuxième valeur de résistance électrique de portion résistive supérieure à ladite première valeur de résistance électrique de portion résistive ;
- un mécanisme de commande apte à occuper :
   - une première position de mécanisme de commande amenant la partie fonctionnelle d'antenne à occuper le premier état électrique de partie fonctionnelle ;
   - au moins une deuxième position de mécanisme de commande amenant la partie fonctionnelle d'antenne à occuper l'au moins un deuxième état électrique de partie fonctionnelle.

Selon l'invention, l'antenne comprend un mécanisme de commande apte à commuter entre la première position de mécanisme de commande et l'au moins une deuxième position de mécanisme de commande, ce qui a pour effet de faire commuter la partie fonctionnelle d'antenne entre respectivement le premier état électrique de partie fonctionnelle et l'au moins un deuxième état électrique de partie fonctionnelle.

Ainsi, le mécanisme de commande est apte à faire passer la partie fonctionnelle d'antenne du premier état électrique de partie fonctionnelle à l'au moins un deuxième état électrique de partie fonctionnelle, et inversement.

Pour ce faire, le mécanisme de commande est apte à faire commuter la résistance électrique de portion résistive entre la première valeur de résistance électrique de portion résistive correspondant au premier état électrique de partie fonctionnelle, et la deuxième valeur de résistance électrique de portion résistive correspondant à l'au moins un deuxième état électrique de partie fonctionnelle.

Plus précisément, le mécanisme de commande est apte à faire passer la valeur de la résistance électrique de portion résistive de la première valeur de résistance électrique de portion résistive à la deuxième valeur de résistance électrique de portion résistive et inversement.

Selon une possibilité, l'antenne de l'invention est destinée à être utilisée au sein d'un radar, et par exemple au sein d'un radar à impulsions.

Selon une possibilité, l'antenne comprend au moins un type d'antenne parmi : une antenne Bowtie, une antenne Vivaldi, une antenne Sinueuse, une antenne dipôle.

Par portion conductrice, on entend une portion conductrice de l'électricité dans les bandes de fréquences radio de fonctionnement, c'est-à-dire une portion au sein de laquelle un courant électrique peut circuler, et par exemple un courant électrique alternatif.

Selon une possibilité, la portion conductrice comprend un métal.

Selon une possibilité, la partie fonctionnelle d'antenne comprend un métal. Selon cette possibilité, la partie fonctionnelle d'antenne est au moins en partie métallique, et comprend par exemple un revêtement métallique sur une partie au moins d'une surface de partie fonctionnelle d'antenne.

Selon une possibilité, la portion résistive est au moins en partie disposée dans ou sur la partie conductrice.

Par première valeur de résistance électrique de portion résistive et deuxième valeur de résistance électrique de portion résistive, on entend respectivement deux valeurs distinctes pouvant être prises par la résistance électrique de portion résistive en fonction de la position de mécanisme de commande occupée par le mécanisme de commande.

Selon une possibilité, la première valeur de résistance électrique de portion résistive correspond à une résistance électrique faible, tandis que la deuxième valeur de résistance électrique de portion résistive correspond à une résistance électrique élevée.

Selon une possibilité, la première valeur de résistance électrique de portion résistive correspond à une résistance électrique nulle, ou sensiblement nulle.

Selon un mode de réalisation, la portion conductrice comprend une première sous-portion conductrice, et une deuxième sous-portion conductrice reliée électriquement à la première sous-portion conductrice.

Selon ce mode de réalisation, lesdites première et deuxième sous-portion conductrice sont distinctes l'une de l'autre, et un courant électrique est apte à circuler dans les deux sens entre la première sous-portion conductrice et la deuxième sous-portion conductrice.

Par exemple, au moins un câble électrique permet de relier électriquement la première sous-portion conductrice de la deuxième sous-portion conductrice de la partie fonctionnelle d'antenne.

Selon une possibilité, la portion résistive est au moins en partie disposée entre la première sous-portion conductrice et la deuxième sous-portion conductrice, et un courant électrique circulant entre la première sous-portion conductrice et la deuxième sous-portion conductrice sera par exemple amené à passer à travers une partie au moins de la portion résistive.

Selon une possibilité, le mécanisme de commutation est au moins en partie disposé entre la première sous-portion conductrice et la deuxième sous-portion conductrice.

Selon un mode de réalisation, la portion résistive comprend un premier élément résistif et un deuxième élément résistif, le mécanisme de commande comprenant un premier élément de commutation configuré pour:
- occuper une première position de premier élément de commutation dans laquelle le premier élément de commutation dirige vers le premier élément résistif un courant électrique circulant entre la première sous-portion conductrice et la deuxième sous-portion conductrice ;
- occuper une deuxième position de premier élément de commutation dans laquelle le premier élément de commutation dirige vers le deuxième élément résistif ledit courant électrique circulant entre la première sous-portion conductrice et la deuxième sous-portion conductrice.

Selon ce mode de réalisation, le premier élément de commutation est apte à diriger, successivement et en fonction de la position qu'il occupe, un courant électrique vers le premier élément résistif ou vers le deuxième élément résistif.

Selon une possibilité, le premier élément résistif est disposé entre la première sous-portion conductrice et la deuxième sous-portion conductrice.

Selon une possibilité, le deuxième élément résistif est également disposé entre la première sous-portion conductrice et la deuxième sous-portion conductrice.

Selon une possibilité, le premier élément de commutation est disposé entre la première sous-portion conductrice et la deuxième sous-portion conductrice.

Selon une possibilité, le premier élément de commutation comprend un commutateur SPDT ou commutateur unipolaire bidirectionnel.

Selon une possibilité, le premier élément résistif présente une valeur de résistance électrique de premier élément résistif, et le deuxième élément résistif présente une valeur de résistance électrique de deuxième élément résistif supérieure à la valeur de résistance électrique de premier élément résistif.

Selon une possibilité, la résistance électrique de premier élément résistif est comprise entre 0 et 50 Ohm.

Selon une possibilité, la valeur de résistance électrique de premier élément résistif est nulle, ou sensiblement nulle.

Selon une possibilité, la résistance électrique de deuxième élément résistif est comprise entre 100 et 500 Ohm.

Selon une possibilité, la résistance électrique de deuxième élément résistif est comprise entre 300 et 400 Ohm, et est par exemple égale à 370 Ohm.

Selon une possibilité, le courant électrique circulant entre la première sous-portion conductrice et la deuxième sous-portion conductrice est un courant électrique alternatif dans les bandes radio utilisées, c'est-à-dire un courant électrique présentant une intensité électrique variable au cours du temps.

Selon une possibilité, la portion résistive comprend en outre un premier élément résistif supplémentaire et un deuxième élément résistif supplémentaire.

Selon une possibilité, le premier élément résistif supplémentaire et le deuxième élément résistif supplémentaire sont chacun disposés entre la première sous portion conductrice et la deuxième sous portion conductrice.

Selon une possibilité, le premier élément résistif supplémentaire est identique au premier élément résistif, et/ou le deuxième élément résistif supplémentaire est identique au deuxième élément résistif.

Selon une possibilité, le mécanisme de commande comprend un premier élément de commutation supplémentaire configuré pour occuper une première position de premier élément de commutation supplémentaire et une deuxième position de premier élément de commutation supplémentaire.

Le premier élément de commutation supplémentaire est agencé pour diriger un courant électrique circulant entre la première sous-portion conductrice et la deuxième sous-portion conductrice respectivement vers le premier élément résistif supplémentaire ou vers le deuxième élément résistif supplémentaire en fonction de la position occupée par ledit premier élément de commutation supplémentaire.

Selon une possibilité, le premier élément de commutation supplémentaire est disposé entre la première sous-portion conductrice et la deuxième sous-portion conductrice.

Selon un mode de réalisation, la portion conductrice comprend une troisième sous-portion conductrice reliée électriquement à la deuxième sous-portion conductrice.

Selon ce mode de réalisation, la deuxième sous-portion conductrice et la troisième sous-portion conductrice sont distinctes l'une de l'autre, un courant électrique étant cependant apte à circuler dans les deux sens entre la deuxième sous-portion conductrice et la troisième sous-portion conductrice.

Selon une possibilité, la portion résistive est au moins en partie disposée entre la deuxième sous-portion conductrice et la troisième sous-portion conductrice.

Selon un mode de réalisation, la portion résistive comprend un troisième élément résistif et un quatrième élément résistif, le mécanisme de commande comprenant un deuxième élément de commutation configuré pour:
- occuper une première position de deuxième élément de commutation dans laquelle le deuxième élément de commutation dirige vers le troisième élément résistif un courant électrique circulant entre la deuxième sous-portion conductrice et la troisième sous-portion conductrice;
- occuper une deuxième position de deuxième élément de commutation dans laquelle le deuxième élément de commutation dirige vers le quatrième élément résistif ledit courant électrique circulant entre la deuxième sous-portion conductrice et la troisième sous-portion conductrice.

Selon ce mode de réalisation, le deuxième élément de commutation est apte à diriger successivement un courant électrique vers le troisième élément résistif ou vers le quatrième élément résistif.

Selon une possibilité, le deuxième élément de commutation est identique au premier élément de commutation.

Selon une possibilité, le deuxième élément de commutation comprend un commutateur SPDT ou commutateur unipolaire bidirectionnel.

Selon une possibilité, le troisième élément résistif est disposé entre la deuxième sous-portion conductrice et la troisième sous-portion conductrice.

Selon une possibilité, le quatrième élément résistif est également disposé entre la deuxième sous-portion conductrice et la deuxième sous-portion conductrice.

Selon une possibilité, le troisième élément résistif présente une valeur de résistance électrique de troisième élément résistif, et le quatrième élément résistif présente une valeur de résistance électrique de quatrième élément résistif supérieure à la valeur de résistance électrique de troisième élément résistif.

Selon une possibilité, la résistance électrique de troisième élément résistif est comprise entre 0 et 50 ohm.

Selon une possibilité, la valeur de résistance électrique de troisième élément résistif est nulle, ou sensiblement nulle.

Selon une possibilité, la résistance électrique de quatrième élément résistif est comprise entre 100 et 500 ohm.

Selon une possibilité, la résistance électrique de quatrième élément résistif est comprise entre 100 et 200 ohm, et est par exemple égale à 160 ohm.

Selon une possibilité, le courant électrique circulant entre la troisième sous-portion conductrice et la quatrième sous-portion conductrice est un courant électrique alternatif, c'est-à-dire un courant électrique présentant une intensité électrique variable au cours du temps.

Selon une possibilité, la portion résistive comprend en outre un troisième élément résistif supplémentaire et un quatrième élément résistif supplémentaire.

Selon une possibilité, le troisième élément résistif supplémentaire et le quatrième élément résistif supplémentaire sont chacun disposés entre la deuxième sous portion conductrice et la troisième sous portion conductrice.

Selon une possibilité, le troisième élément résistif supplémentaire est identique au troisième élément résistif, et/ou le quatrième élément résistif supplémentaire est identique au quatrième élément résistif.

Selon une possibilité, le mécanisme de commande comprend un deuxième élément de commutation supplémentaire configuré pour occuper une première position de deuxième élément de commutation supplémentaire et une deuxième position de deuxième élément de commutation supplémentaire.

Le deuxième élément de commutation supplémentaire est agencé pour diriger un courant électrique circulant entre la deuxième sous-portion conductrice et la troisième sous-portion conductrice respectivement vers le troisième élément résistif supplémentaire ou vers le quatrième élément résistif supplémentaire en fonction de la position occupée par ledit deuxième élément de commutation supplémentaire.

Selon une possibilité, le deuxième élément de commutation supplémentaire est disposé entre la deuxième sous-portion conductrice et la troisième sous-portion conductrice.

Selon une possibilité, la portion conductrice comprend encore une quatrième sous-portion conductrice reliée électriquement à la troisième sous-portion conductrice, et la portion résistive comprend un cinquième élément résistif et un sixième élément résistif, et le mécanisme de commande comprend un troisième élément de commutation configuré pour diriger un courant électrique circulant entre la troisième sous-portion conductrice et la quatrième sous-portion conductrice vers le cinquième élément résistif ou vers le sixième élément résistif en fonction de la position qu'il occupe.

Selon un mode de réalisation, l'antenne comprend une partie d'excitation d'antenne apte à transmettre un courant électrique à la partie fonctionnelle d'antenne.

La partie d'excitation est configurée pour exciter la partie fonctionnelle d'antenne, c'est-à-dire lui transmettre un courant électrique adéquate de manière à ce que la partie fonctionnelle d'antenne produise un rayonnement électromagnétique correspondant au courant électrique que lui transmet la partie d'excitation.

Selon une possibilité, l'antenne comprend une partie d'excitation d'antenne configurée pour transmettre à la partie fonctionnelle d'antenne un courant électrique, comme par exemple un courant électrique alternatif, lequel est ensuite notamment destiné à parcourir la portion conductrice de la partie fonctionnelle d'antenne.

Selon une possibilité, la partie d'excitation d'antenne est configurée pour transmettre à la partie fonctionnelle d'antenne un courant électrique alternatif composé d'une impulsion de très courte durée.

Selon une possibilité, l'antenne comprend une partie fonctionnelle d'antenne supplémentaire.

Selon cette possibilité, la partie d'excitation d'antenne est également configurée pour transmettre à la partie fonctionnelle d'antenne supplémentaire un courant électrique alternatif, et par exemple un courant électrique alternatif composé d'une impulsion de très courte durée.

Selon une possibilité, la partie fonctionnelle d'antenne supplémentaire est identique à la partie fonctionnelle d'antenne, et présente donc une même structure et en particulier une portion conductrice identique à la portion conductrice de la partie fonctionnelle d'antenne et une portion résistive identique à la portion résistive de la partie fonctionnelle d'antenne.

Selon une possibilité, la partie fonctionnelle et la partie fonctionnelle d'antenne supplémentaire sont respectivement disposées de part et d'autre de la partie d'excitation d'antenne.

Selon un mode de réalisation, lorsque la partie d'excitation d'antenne transmet un courant électrique à la partie fonctionnelle d'antenne, la portion conductrice est parcourue par un courant électrique et la partie fonctionnelle d'antenne est configurée pour émettre un rayonnement électromagnétique.

Selon ce mode de réalisation, l'antenne peut fonctionner comme antenne émettrice, et la partie fonctionnelle d'antenne comprend un élément rayonnant qui, convenablement excité par un courant électrique, est apte à émettre un rayonnement électromagnétique dans au moins une direction.

Une fois transmis à la partie fonctionnelle d'antenne, le courant électrique parcourt la portion conductrice de la partie fonctionnelle d'antenne, ce qui donne lieu à l'émission d'une onde électromagnétique.

Selon l'invention, l'intensité électrique du courant électrique parcourant la portion conductrice de la partie fonctionnelle d'antenne est atténuée par la portion résistive, et notamment plus ou moins atténuée par la valeur de la résistance électrique de portion résistive.

En effet, lorsque, par exemple, la portion conductrice comprend une première sous-portion conductrice et une deuxième sous-portion conductrice reliée électriquement à la première sous-portion conductrice, le courant électrique transmis par la partie d'excitation d'antenne se propage d'abord sur la première sous-portion conductrice, puis atteint la deuxième sous-portion conductrice en traversant le premier élément résistif ou le deuxième élément résistif en fonction de la position occupée par le premier élément de commutation.

Lorsque l'antenne fonctionne en tant qu'antenne émettrice, la partie fonctionnelle d'antenne peut alternativement occuper le premier état électrique de partie fonctionnelle, ou l'au moins un deuxième état électrique de partie fonctionnelle.

Ainsi, selon les besoins ou les applications, le mécanisme de commande peut donc occuper la première position de mécanisme de commande pour une résistance électrique de portion résistive moindre, ou l'au moins une deuxième position de mécanisme de commande pour une résistance électrique de portion résistive plus élevée et donc une plus grande atténuation du courant électrique parcourant la portion conductrice.

Selon un mode de réalisation, la partie fonctionnelle d'antenne est configurée pour capter un rayonnement électromagnétique incident et pour convertir ledit rayonnement électromagnétique incident en un courant électrique parcourant la portion conductrice.

Selon ce mode de réalisation, l'antenne peut fonctionner comme antenne réceptrice, et la partie fonctionnelle d'antenne est configurée pour détecter et capter un rayonnement électromagnétique incident, c'est-à-dire un rayonnement électromagnétique se propageant autour de l'antenne, ledit rayonnement électromagnétique incident étant ensuite converti en un courant électrique notamment destiné à parcourir la portion conductrice de la partie fonctionnelle d'antenne.

Ainsi, une antenne selon l'invention peut fonctionner en tant qu'antenne émettrice, pour laquelle la partie fonctionnelle d'antenne émet un rayonnement électromagnétique, et/ou en tant qu'antenne réceptrice, pour laquelle la partie fonctionnelle d'antenne capte un rayonnement électromagnétique incident.

Selon un deuxième aspect, l'invention porte sur un radar comprenant au moins une antenne telle que définie ci-dessus, le radar étant apte à fonctionner dans :
- un premier mode de fonctionnement de radar dans lequel la partie fonctionnelle d'antenne occupe le premier état électrique de partie fonctionnelle ;
- au moins un deuxième mode de fonctionnement de radar dans lequel la partie fonctionnelle d'antenne occupe l'au moins un deuxième état électrique de partie fonctionnelle.

Selon une possibilité, le radar de l'invention comprend un radar à impulsions.

Selon une possibilité, le radar de l'invention peut être utilisé dans tous les domaines impliquant une recherche et une détection non destructives.

Selon une possibilité, le radar de l'invention peut être utilisé dans le domaine médical, par exemple pour la détection de tumeurs.

Selon une possibilité, le radar de l'invention comprend un radar à pénétration de sol ou radar de sol.

Selon cette dernière possibilité, le premier mode de fonctionnement de radar correspond à un mode de détection profonde dans lequel le radar est particulièrement adapté à détecter des cibles profondément enfouies, et le deuxième mode de fonctionnement de radar correspond à un mode de détection peu profonde dans lequel le radar est particulièrement adapté à détecter des cibles proches de la surface du sol.

Selon une possibilité, l'au moins une antenne est disposée au sein d'une cavité, par exemple une cavité délimitée par une boîte métallique de forme parallélépipédique comprenant au moins une ouverture.

Selon une possibilité, la boîte métallique présente une forme parallélépipédique, et est ouverte sur l'un de ses six côtés.

Selon une possibilité, au moins un élément résistif externe est disposé entre l'au moins une antenne et une paroi de la boîte métallique.

Par exemple, l'au moins un élément résistif externe est disposé entre une surface de la partie fonctionnelle d'antenne et une paroi de la boîte métallique.

En particulier, l'au moins un élément résistif externe est disposé entre une surface de la portion conductrice et une paroi de la boîte métallique.

Selon une possibilité, l'au moins un élément résistif externe présente une résistance électrique de valeur comprise entre 50 et 500 ohm, et par exemple égale à 100 ohm ou égale à 400 ohm.

Selon un mode de réalisation, le radar comprend au moins une première antenne et une deuxième antenne telles que définies ci-dessus, le radar étant un radar de sol.

Selon ce mode de configuration, la première antenne est destinée à occuper une fonction d'antenne émettrice, et la deuxième antenne est destinée à occuper une fonction d'antenne réceptrice.

Selon une possibilité, le radar de sol de l'invention comprend au moins deux antennes destinées à fonctionner en tant qu'antennes émettrices, et au moins deux antennes destinées à fonctionner en tant qu'antennes réceptrices.

Selon une possibilité, le radar de sol de l'invention comprend au moins six antennes destinées à fonctionner en tant qu'antennes émettrices, par exemple huit antennes émettrices, et au moins six antennes destinées à fonctionner en tant qu'antennes réceptrices, par exemple huit antennes réceptrices.

Selon une possibilité, les huit antennes émettrices et les huit antennes réceptrices sont toutes comprises au sein d'une cavité délimitée par un boîtier de forme parallélépipédique présentant un côté ouvert faisant face au sol vers lequel le rayonnement électromagnétique émis par les huit antennes émettrices est dirigé.

Selon une possibilité, le radar comprend une partie de conversion apte à convertir le courant électrique issu du rayonnement électromagnétique incident capté par le ou les antennes réceptrices en un signal temporel représentatif d'une réponse impulsionnelle de radar.

Selon un troisième aspect, l'invention porte sur un procédé de fonctionnement d'un radar tel que défini ci-dessus, le procédé comprenant :
- une étape de commutation du mécanisme de commande de l'au moins une première antenne sur la première position de mécanisme de commande ou sur l'au moins une deuxième position de mécanisme de commande ;
- une étape d'excitation, mise en œuvre par la partie d'excitation d'antenne de l'au moins une première antenne, de la partie fonctionnelle d'antenne de l'au moins une première antenne ;
- une étape d'émission, mise en œuvre par la partie fonctionnelle d'antenne de l'au moins une première antenne, d'un rayonnement électromagnétique ;
- une étape de détection, mise en œuvre par la partie fonctionnelle d'antenne de l'au moins une deuxième antenne, d'un rayonnement électromagnétique incident.

Selon une possibilité, le radar comprend une pluralité de premières antennes, l'étape de commutation comprenant une étape de commutation du mécanisme de commande de chacune des premières antennes de la pluralité de premières antennes.

Selon une possibilité, le radar comprend une pluralité de deuxièmes antennes, l'étape de détection comprenant une étape de détection, mise en œuvre par la partie fonctionnelle d'antenne de chacune des deuxièmes antennes de la pluralité de deuxièmes antennes, d'un rayonnement électromagnétique incident.

Selon une possibilité, le procédé comprend une étape de détermination d'un mode de fonctionnement de radar souhaité parmi le premier mode de fonctionnement de radar et l'au moins un deuxième mode de fonctionnement de radar.

Selon une possibilité, l'étape de commutation est fonction du résultat de l'étape de détermination.

En particulier, le mécanisme de commande de la première antenne commute sur la première position de mécanisme de commande si le premier mode de fonctionnement de radar est déterminé à l'étape de détermination ou sur l'au moins une deuxième position de mécanisme de commande si l'au moins un deuxième mode de fonctionnement de radar est déterminé à l'étape de détermination.

Selon une possibilité, le procédé comprend une étape de génération d'un courant électrique alternatif comprenant au moins une impulsion.

Par exemple, cette étape de génération peut comprendre une étape d'émission séquentielle de plusieurs signaux bande étroite de manière à synthétiser une impulsion.

Selon une possibilité, l'étape d'excitation comprend une étape de transmission à la partie fonctionnelle d'antenne de la première antenne, mise en œuvre par la partie d'excitation d'antenne de la première antenne, du courant électrique alternatif généré à l'étape de génération.

Selon une possibilité, le procédé comprend une étape de propagation du courant électrique alternatif généré à l'étape de génération sur la portion conductrice de la partie fonctionnelle d'antenne de la première antenne.

Selon une possibilité, le rayonnement électromagnétique émis à l'étape d'émission est dirigé vers le bas, en particulier vers un sol, selon une direction verticale sensiblement perpendiculaire à la surface du sol plat.

Selon une possibilité, le rayonnement électromagnétique émis à l'étape d'émission est au moins en partie réfléchi par une cible enfouie dans le sol.

Selon une possibilité, le rayonnement électromagnétique émis à l'étape d'émission est au moins en partie réfléchi par la surface du sol vers lequel il est dirigé.

Selon une possibilité, le rayonnement électromagnétique incident capté par la deuxième antenne comprend une composante correspondant à la réflexion sur la cible du rayonnement électromagnétique émis par la première antenne, une composante correspondant à la réflexion sur la surface du sol du rayonnement électromagnétique émis par la première antenne, et une composante correspondant à la partie du rayonnement électromagnétique émis par la première antenne reçue directement.

Selon une possibilité, le procédé comprend une étape de conversion du rayonnement électromagnétique incident en un courant électrique apte à parcourir la portion conductrice de la partie fonctionnelle d'antenne de la deuxième antenne.

Selon une possibilité, le procédé comprend aussi une étape de conversion du courant électrique induit par le rayonnement électromagnétique incident en une réponse impulsionnelle de radar.

Selon une possibilité, le procédé comprend une étape d'analyse de ladite réponse impulsionnelle de radar afin de déterminer au moins une information sur la cible, telle qu'une position de la cible, une orientation de la cible, une nature de la cible, une dimension de la cible.

L'antenne de l'invention est reconfigurable, c'est-à-dire que sa partie fonctionnelle d'antenne est apte à occuper au moins deux états électriques distincts ayant une influence sur les caractéristiques du rayonnement électromagnétique émis, ce qui permet, lorsque l'antenne est utilisée au sein d'un système radar, de pouvoir travailler selon deux modes de fonctionnement de radar distincts : un premier mode favorisant la détection d'objets peu profondément enfouis dans le sol, et un deuxième mode favorisant la détection d'objets situés à des profondeurs importantes.

Le radar de sol de l'invention est donc capable de détecter non seulement des cibles peu profondes, mais également des cibles profondément enfouies dans le sol, et il est donc utile pour sonder et imager efficacement le sol à différentes profondeurs.

### Brève description des figures

L'invention sera mieux comprise, et ses principes et avantages mieux appréhendés, à la lecture de la description détaillée ci-dessous, faite en référence aux figures suivantes :
[Fig.1a] et [Fig.1b] illustrent schématiquement les principes de fonctionnement d'un radar de sol bi statique.
[Fig.2a] est une représentation schématique d'une antenne selon un mode de réalisation de l'invention.
[Fig.2b] et [Fig.2c] illustrent les principes de fonctionnement de circuits électriques appartenant à l'antenne de la figure 2a.
[Fig.2d] est une représentation schématique de l'antenne de la figure 2a dans un premier état électrique.
[Fig.2e] est une représentation schématique de l'antenne de la figure 2a dans un deuxième état électrique.
[Fig.3a] représente une réponse impulsionnelle d'un radar de sol comprenant une antenne émettrice conforme à la figure 2a occupant l'état électrique de la figure 2d, ladite réponse impulsionnelle correspondant à la détection d'une cible profondément enfouie.
[Fig.3b] représente une réponse impulsionnelle d'un radar de sol comprenant une antenne émettrice conforme à la figure 2a occupant l'état électrique de la figure 2e, ladite réponse impulsionnelle correspondant à la détection d'une cible peu profondément enfouie.
[Fig.4] représente un radar comprenant huit antennes conformes à celle de la figure 2a occupant la fonction d'antenne émettrice, et huit antennes conformes à celle de la figure 2a occupant la fonction d'antenne réceptrice.
[Fig.5a] et [Fig.5b] représentent respectivement une vue du haut et une vue de côté du radar de la figure 4 en situation de fonctionnement.
[Fig.6a] représente un premier diagramme de radar obtenu lorsque le radar de la figure 4 fonctionne selon le premier mode de fonctionnement de radar.
[Fig.6b] représente un deuxième diagramme de radar obtenu lorsque le radar de la figure 4 fonctionne selon le deuxième mode de fonctionnement de radar.
[Fig.7] représente une première réponse impulsionnelle d'antenne réceptrice obtenue dans le premier mode de fonctionnement de radar, et une deuxième réponse impulsionnelle d'antenne réceptrice obtenue dans le deuxième mode de fonctionnement de radar.

### Description détaillée

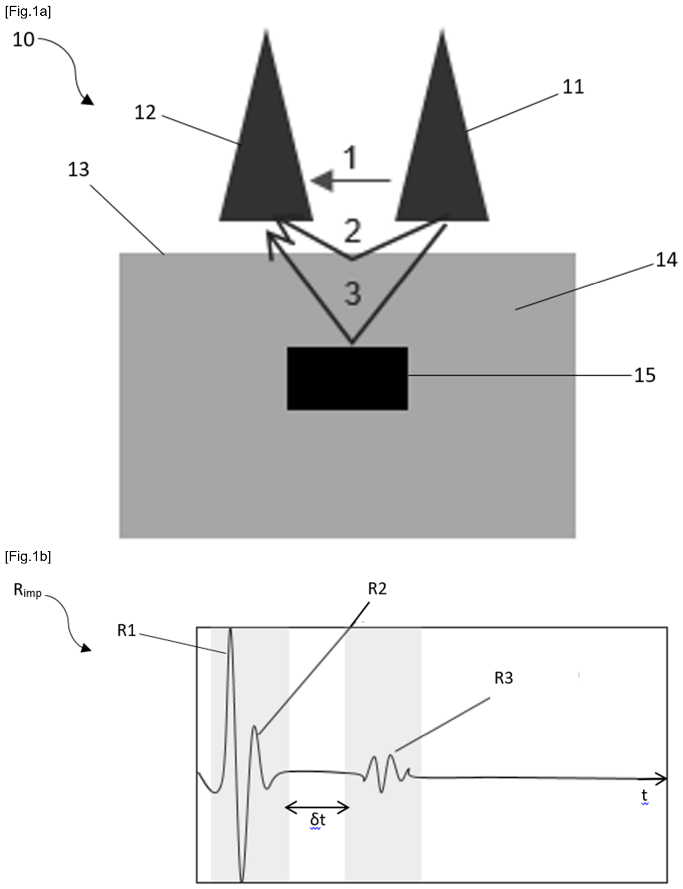

Le radar de sol 10 de la figure 1a comprend une antenne émettrice 11 et une antenne réceptrice 12 situées à proximité l'une de l'autre, chacune desdites antennes étant également située à proximité d'une surface 13 d'un sol 14 au sein duquel est enfouie une cible 15, par exemple un coffre en métal.

L'antenne émettrice 11 émet un rayonnement électromagnétique. Le radar de sol 10 est en particulier un radar à impulsions dans lequel l'antenne émettrice 11 émet un rayonnement électromagnétique lorsqu'elle est excitée par un courant électrique alternatif composé d'au moins une impulsion de très courte durée et qui se propage sur une partie conductrice de l'antenne émettrice 11.

Une première partie 1 dudit rayonnement électromagnétique est directement (couplage direct) reçue par l'antenne réceptrice 12, une deuxième partie 2 dudit rayonnement électromagnétique est réfléchie par la surface 13 du sol 14 puis reçue par l'antenne réceptrice 12, et une troisième partie 3 dudit rayonnement électromagnétique pénètre dans le sol 14, est réfléchie par la cible 15 puis reçue par l'antenne réceptrice 12.

La captation du rayonnement électromagnétique incident par l'antenne réceptrice 12 génère un courant électrique alternatif qui se propage sur une partie conductrice de l'antenne réceptrice 12, l'intensité électrique du courant électrique alternatif étant représenté en fonction du temps par le biais du signal temporel de la figure 1b représentant la réponse impulsionnelle Rᵢₘₚ.

Le rayonnement électromagnétique incident capté par l'antenne réceptrice donne donc lieu à la réponse impulsionnelle Rᵢₘₚ représentée à la figure 1b et qui comprend donc une première composante R1 correspondant au couplage direct des deux antennes, une deuxième composante R2 correspondant à la réflexion sur la surface du sol du rayonnement électromagnétique émis par l'antenne émettrice, et une troisième composante R3 correspondant à la réflexion sur la cible du rayonnement électromagnétique émis par l'antenne émettrice.

La composante R3 de la réponse impulsionnelle Rᵢₘₚ présente une intensité électrique bien inférieure à l'intensité électrique de la composante R1, et dans une moindre mesure à l'intensité électrique de la composante R2.

De plus, la composante R1 et la composante R2 de la réponse impulsionnelle Rᵢₘₚ sont situés à proximité l'une de l'autre, ce qui signifie que la deuxième partie 2 du rayonnement électromagnétique réfléchie par la surface 13 du sol 14 est reçue par l'antenne réceptrice 12 très peu de temps après la première partie 1 du rayonnement électromagnétique reçue directement par l'antenne réceptrice 12.

La troisième composante R3 de la réponse impulsionnelle Rᵢₘₚ est séparée des composantes de la composante R2 par un intervalle de temps δt correspondant à la durée entre la réception de la deuxième partie 2 du signal électromagnétique réfléchie par la surface 13 du sol 14 et la réception de la troisième partie 3 du rayonnement électromagnétique réfléchie par la cible 15.

Cet intervalle de temps δt dépend directement de la distance entre la cible 15 et respectivement les antennes émettrice 11 et réceptrice 12, et il est évident que moins la cible 15 est éloignée de l'une et l'autre de ces antennes émettrice 11 et réceptrice 12, moins l'intervalle de temps δt sera important.

Ainsi, une composante d'une réponse impulsionnelle Rᵢₘₚ d'un radar correspondant à la réflexion d'un rayonnement électromagnétique émis sur une cible enfouie peu profondément peut passer inaperçue, étant confondue avec la composante correspondant à l'écho de la surface du sol ou encore avec un écho indésirable.

De plus, des signaux intempestifs ou des échos indésirables correspondant aux phénomènes de « *time-domain ringing* » ou « *radar clutter* » viennent également perturber la réponse impulsionnelle Rᵢₘₚ et rendre potentiellement difficile l'identification de la composante correspondant à l'écho de la cible.

Or, si la composante correspondant à l'écho d'une cible passe inaperçue, la cible en question ne sera évidemment ni détectée, ni ultérieurement analysée par le radar de sol.

Pour limiter l'effet des signaux intempestifs et échos indésirables dans la réponse impulsionnelle et donc leur influence sur la détection de l'écho de la cible, il est possible d'intégrer des charges résistives, ou éléments résistifs, au sein même de l'antenne émettrice.

L'intégration de telles charges résistives dans la structure même de l'antenne présente néanmoins l'inconvénient de diminuer l'efficacité de rayonnement de l'antenne et donc sa capacité à détecter des cibles plus profondément enfouies dans le sol.

Pour pouvoir détecter de telles cibles « profondes », l'antenne émettrice doit en effet présenter une efficacité de rayonnement élevée, afin d'émettre un rayonnement électromagnétique d'intensité suffisante pour pouvoir atteindre ladite cible, et produire un écho de cible d'intensité suffisante pour pouvoir être détecté par l'antenne réceptrice.

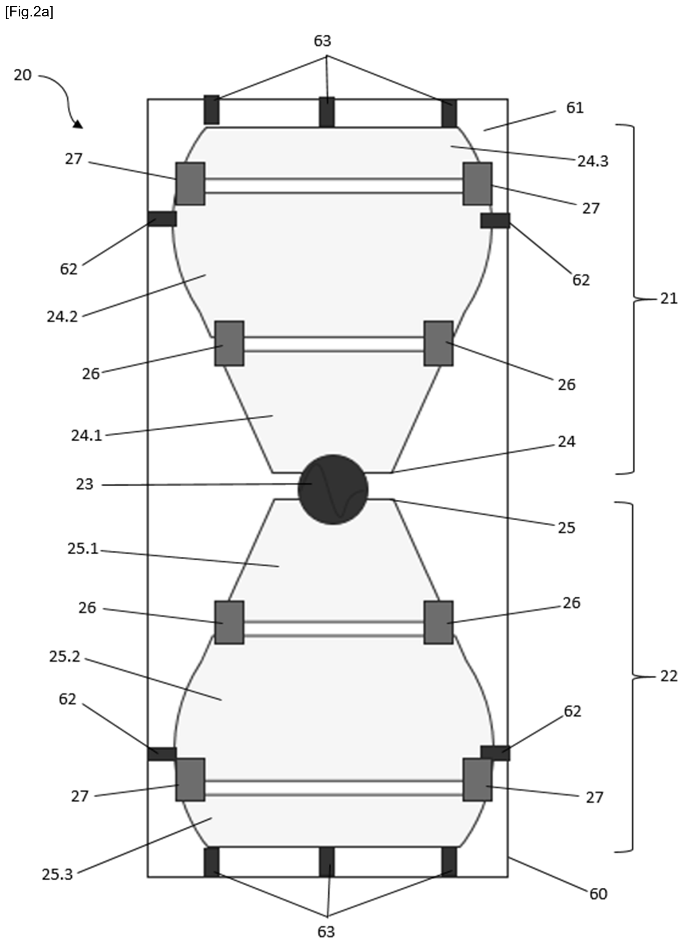

La présente invention a pour objectif de résoudre ces inconvénients grâce notamment à l'antenne 20 représentée à la figure 2a, laquelle correspond à un mode de réalisation particulier et non limitatif de l'invention.

L'antenne 20 est une antenne de type Bowtie ou *nœud papillon* (« *Bowtie antenna* » en terminologie anglaise) représentée comme étant disposée au sein d'une cavité 61 délimitée par une boîte 60 de forme parallélépipédique comprenant des parois métalliques et au moins une ouverture (non représentée) permettant à l'antenne 20 de pouvoir émettre un rayonnement électromagnétique vers l'extérieur dans au moins une direction.

L'antenne 20 comprend une première partie fonctionnelle d'antenne 21 pouvant par exemple être une plaque métallique, et une deuxième partie fonctionnelle d'antenne 22 identique à la première partie fonctionnelle d'antenne 21.

L'antenne comprend également une partie d'excitation 23 apte à exciter respectivement la première partie fonctionnelle d'antenne 21 et la deuxième partie fonctionnelle d'antenne 22, c'est-à-dire à transmettre un courant électrique alternatif, par exemple composé d'impulsions, à respectivement la première partie fonctionnelle d'antenne 21 et la deuxième partie fonctionnelle d'antenne 22.

De plus, la première partie fonctionnelle d'antenne 21 et la deuxième partie fonctionnelle d'antenne 22 sont respectivement disposées de part et d'autre de la partie d'excitation 23.

La première partie fonctionnelle d'antenne 21 comprend une portion conductrice 24 composée d'une première sous-portion conductrice 24.1, d'une deuxième sous-portion conductrice 24.2 reliée électrique à la première sous-portion conductrice 24.1 par l'intermédiaire de deux premiers circuits électriques 26, et d'une troisième sous-portion conductrice 24.3 reliée électriquement à la deuxième sous-portion conductrice 24.2 par l'intermédiaire de deux deuxièmes circuits électriques 27.

De manière similaire, la deuxième partie fonctionnelle d'antenne 22 comprend une portion conductrice 25 composée d'une première sous-portion conductrice 25.1, d'une deuxième sous-portion conductrice 25.2 reliée électrique à la première sous-portion conductrice 25.1 par l'intermédiaire de deux premiers circuits électriques 26, et d'une troisième sous-portion conductrice 25.3 reliée électriquement à la deuxième sous-portion conductrice 25.2 par l'intermédiaire de deux deuxièmes circuits électriques 27.

Des charges résistives sont en outre disposées entre l'antenne 20 et les parois de la boîte 60.

En particulier, deux premières charges résistives externes 62 sont disposées entre la deuxième sous-portion conductrice 24.2 de la première partie fonctionnelle d'antenne 21 et respectivement deux parois de la boîte 60, et trois deuxième charges résistives externes 63 sont disposées entre la troisième sous-portion conductrice 24.3 de la première partie fonctionnelle d'antenne 21 et une paroi de la boîte 60.

De manière similaire, deux premières charges résistives externes 62 sont disposées entre la deuxième sous-portion conductrice 25.2 de la deuxième partie fonctionnelle d'antenne 22 et respectivement deux parois de la boîte 60, et trois deuxième charges résistives externes 63 sont disposées entre la troisième sous-portion conductrice 25.3 de la deuxième partie fonctionnelle 22 et une paroi de la boîte 60.

Dans le mode de réalisation représenté, lesdites premières charges résistives externes 62 présentent chacune une résistance électrique égale à 100 ohm, tandis que lesdites deuxièmes charges résistives externes 63 présentent chacune une résistance électrique égale à 400 ohm. Evidemment, d'autres valeurs de résistances électriques sont envisageables.

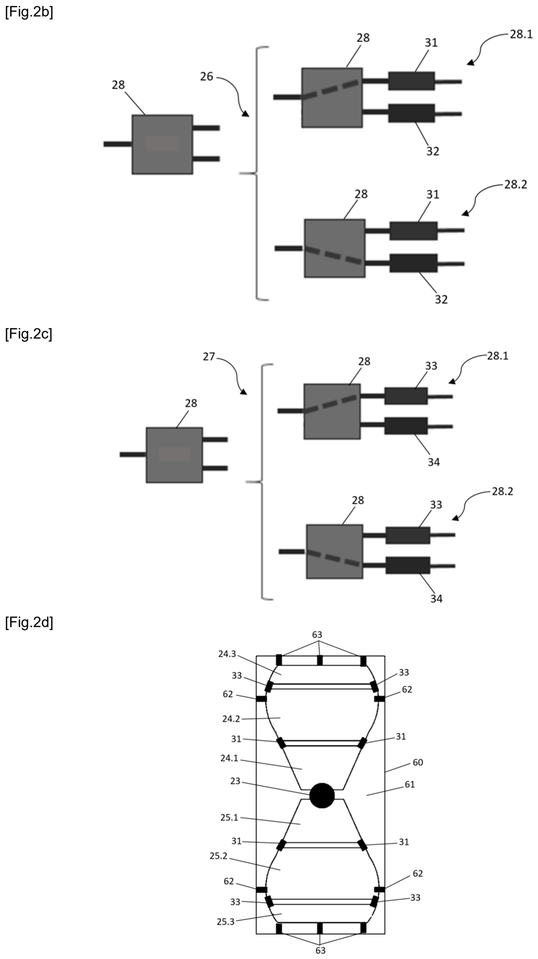

Les principes du fonctionnement desdits premiers circuits électriques 26 et deuxièmes circuits électriques 27 sont respectivement illustrés à la figure 2b et à la figure 2c.

Il est à souligner que la structure et le fonctionnement des premiers circuits électriques 26 sont similaires à la structure et au fonctionnement des deuxièmes circuits électriques 27.

En particulier, chaque premier circuit électrique 26 et chaque premier circuit électrique 27 comprend un élément de commutation 28 du type commutateur SPDT ou commutateur unipolaire bidirectionnel (« *SPDT switch* » ou « *Single Pole Double Throw switch* » en terminologie anglaise).

L'élément de commutation 28, qui comprend une entrée et deux sorties, permet de diriger, en fonction de la position qu'il occupe, un courant électrique reçu sur son entrée vers l'une ou l'autre de ses deux sorties, lesquelles sont respectivement branchées à des éléments résistifs (ou charges résistives) présentant des valeurs de résistance électrique distincte. Plus précisément, l'élément de commutation 28 est configuré pour occuper une première position d'élément de commutation 28.1 ou une deuxième position 28.2.

Au sein de la première partie fonctionnelle d'antenne 21, l'élément de commutation 28 appartenant aux premiers circuits électriques 26 reçoit en entrée le courant électrique circulant entre la première sous-portion conductrice 24.1 et la deuxième sous-portion conductrice 24.2, et l'élément de commutation 28 appartenant aux deuxièmes circuits électriques 27 reçoit en entrée le courant électrique circulant entre la deuxième sous-portion conductrice 24.2 et la troisième sous-portion conductrice 24.3

De manière similaire, au sein de la deuxième partie fonctionnelle d'antenne 22, l'élément de commutation 28 appartenant aux premiers circuits électriques 26 reçoit en entrée le courant électrique circulant entre la première sous-portion conductrice 25.1 et la deuxième sous-portion conductrice 25.2, et l'élément de commutation 28 appartenant aux deuxièmes circuits électriques 27 reçoit en entrée le courant électrique circulant entre la deuxième sous-portion conductrice 25.2 et la troisième sous-portion conductrice 25.3

Dans la position 28.1, l'élément de commutation 28 appartenant aux premiers circuits électriques 26 dirige le courant électrique reçu en entrée vers un élément résistif 31 présentant une résistance électrique sensiblement égale à 0 ohm, tandis que dans la position 28.2, l'élément de commutation 28 appartenant aux premiers circuits électriques 26 dirige le courant électrique reçu en entrée vers un élément résistif 32 présentant une résistance électrique égale à 370 ohm.

Dans la position 28.1, l'élément de commutation 28 appartenant aux deuxièmes circuits électriques 27 dirige le courant électrique reçu en entrée vers un élément résistif 33 présentant une résistance électrique sensiblement égale à 0 ohm, tandis que dans la position 28.2, l'élément de commutation 28 appartenant aux deuxièmes circuits électriques 27 dirige le courant électrique reçu en entrée vers un élément résistif 34 présentant une résistance électrique égale à 160 ohm.

Ainsi, l'antenne 20 comprend un mécanisme de commande constitué des différents éléments de commutation 28, et une portion résistive constituée des différents éléments résistifs 31, 32, 33, 34.

Le mécanisme de commande de l'antenne 20 est configuré pour pouvoir occuper une première position de mécanisme de commande dans laquelle tous les éléments de commutation 28 appartenant aux premiers circuits électriques 26 occupent la première position 28.1 et dans laquelle tous les éléments de commutation 28 appartenant aux deuxièmes circuits électriques 27 occupent également la première position 28.1.

Le mécanisme de commande de l'antenne 20 est également configuré pour pouvoir occuper une deuxième position de mécanisme de commande dans laquelle tous les éléments de commutation 28 appartenant aux premiers circuits électriques 26 occupent la deuxième position 28.2 et dans laquelle tous les éléments de commutation 28 appartenant aux deuxièmes circuits électriques 27 occupent également la deuxième position 28.2.

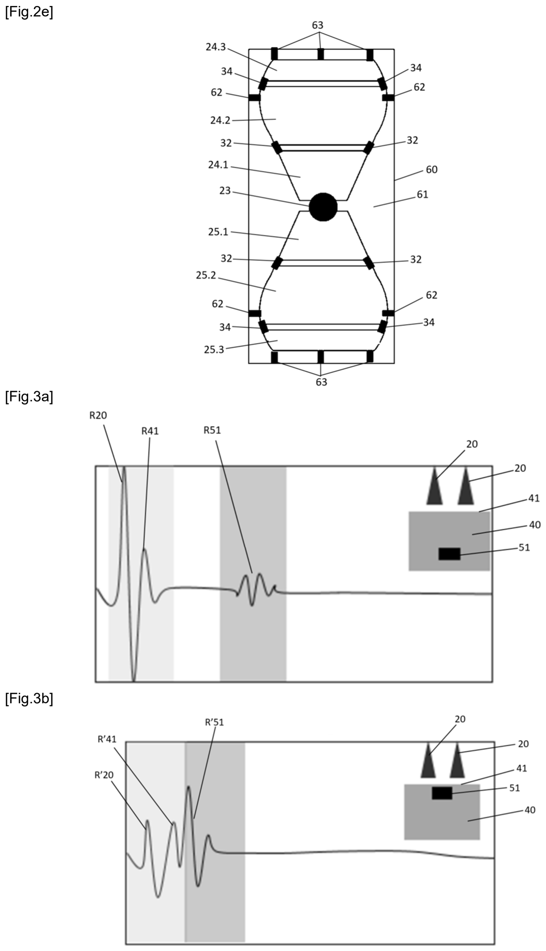

La première position de mécanisme de commande amène les première et deuxième parties fonctionnelles d'antenne 21, 22 à occuper un premier état électrique de partie fonctionnelle (représenté à la figure 2d), tandis que la deuxième position de mécanisme de commande amène les première et deuxième parties fonctionnelles d'antenne 21, 22 à occuper un deuxième état électrique (représenté à la figure 2e).

Dans le deuxième état électrique de partie fonctionnelle, la portion résistive, constituée notamment des éléments résistifs 32 et 34 (figure 2e), présente une valeur de résistance électrique supérieure à la valeur de résistance électrique présentée par la portion résistive dans le premier état de partie fonctionnelle dans lequel la portion résistive est constituée des éléments résistifs 31 et 33 (figure 2d).

Comme cela est représenté sur les figures 3a et 3b, l'antenne 20 peut être intégrée au sein d'un radar de sol bistatique comprenant au moins une première antenne 20 occupant la fonction d'antenne émettrice et une deuxième antenne 20 occupant la fonction d'antenne réceptrice.

Lorsque les première et deuxième parties fonctionnelles d'antenne de l'antenne 20 faisant office d'antenne émettrice occupent le premier état électrique de partie fonctionnelle, le radar de sol est particulièrement adaptée à la détection d'une cible 51 profondément enfouie dans un sol 40, c'est-à-dire d'une cible 51 éloignée d'une surface 41 du sol 40, comme cela est représenté à la figure 3a.

Dans cet état électrique, l'efficacité du rayonnement des première et deuxième parties fonctionnelles d'antenne 21, 22 est élevé, puisque la portion résistive, qui présente une résistance électrique sensiblement nulle, n'atténue pas ou peu le courant électrique alternatif qui parcourt les portions conductrices 24, 25 suite à l'excitation exercée par la partie d'excitation d'antenne 23.

La composante R20 de la réponse impulsionnelle correspondant au couplage direct des antennes 20 émettrice et réceptrice, et la composante R41 correspondant à l'écho de la surface 41 du sol 40 présente donc des intensités élevées.

Cependant, la composante R51 correspondant à l'écho de la cible 51 étant reçue bien après et présentant une intensité suffisante, est clairement identifiée.

Lorsque les première et deuxième parties fonctionnelles d'antenne de l'antenne 20 faisant office d'antenne émettrice occupent le deuxième état électrique de partie fonctionnelle, le radar de sol est particulièrement adaptée à la détection de la cible 51 peu profondément enfouie dans le sol 40, c'est-à-dire que la cible 51 est située à proximité de la surface 41 du sol 40, comme cela est représenté à la figure 3b.

Dans cet état électrique, l'efficacité du rayonnement des première et deuxième parties fonctionnelles d'antenne 21, 22 est moins élevé, puisque la portion résistive, qui présente une résistance électrique plus élevée, atténue le courant électrique alternatif qui parcourt les portions conductrices 24, 25 suite à l'excitation exercée par la partie d'excitation d'antenne 23, ce qui permet également d'atténuer l'intensité du rayonnement électromagnétique émis.

La composante R'20 de la réponse impulsionnelle correspondant au couplage direct des antennes 20 émettrice et réceptrice, et la composante R'41 correspondant à l'écho de la surface 41 du sol 40 présente donc des intensités moins élevées. De plus, les échos indésirables (« *time-domain ringing* ») résultant notamment du couplage direct sont également atténués.

La composante R'51 correspondant à l'écho de la cible 51, bien que reçu immédiatement après l'écho de la surface du sol R'41, se distingue clairement et est donc identifié.

L'intérêt et l'efficacité de l'antenne reconfigurable de l'invention ont plus concrètement été mises en lumière par une expérience de terrain menée par les inventeurs et mettant en œuvre un radar de sol 70 comprenant un premier groupe 71 de huit antennes 20 émettrices 20ₜ₁- 20ₜ₈ disposées au sein d'une première boîte métallique compartimentée, et un deuxième groupe 72 de huit antennes 20 réceptrices 20ᵣ₁-20ᵣ₈ également disposées au sein d'une deuxième boîte métallique compartimentée identique à la première boîte métallique compartimentée.

La première boîte métallique et la deuxième boîte métallique comprennent chacune huit compartiments recevant chacun une antenne, chaque compartiment comprenant au moins une ouverture permettant à chaque antenne émettrice 20ₜ₁-20ₜ₈ d'émettre un rayonnement électromagnétique vers l'extérieur dans au moins une direction, et permettant à chaque antenne réceptrice 20ᵣ₁-20ᵣ₈ de recevoir et capter un rayonnement électromagnétique incident.

Un tel radar de sol 70 peut être utilisé pour détecter et identifier efficacement tour à tour une première cible peu profondément enfouie, et une deuxième cible profondément enfouie dans un sol.

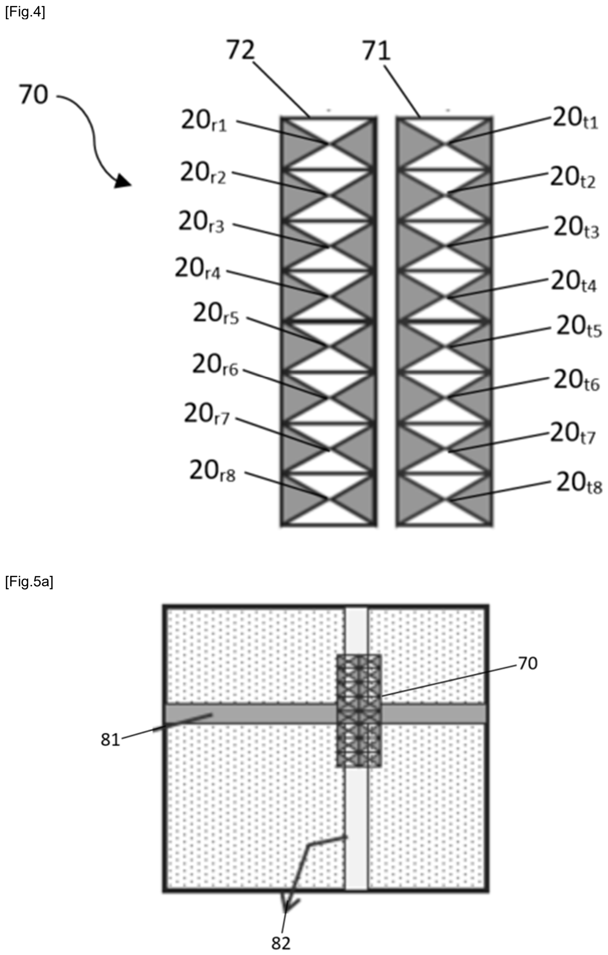

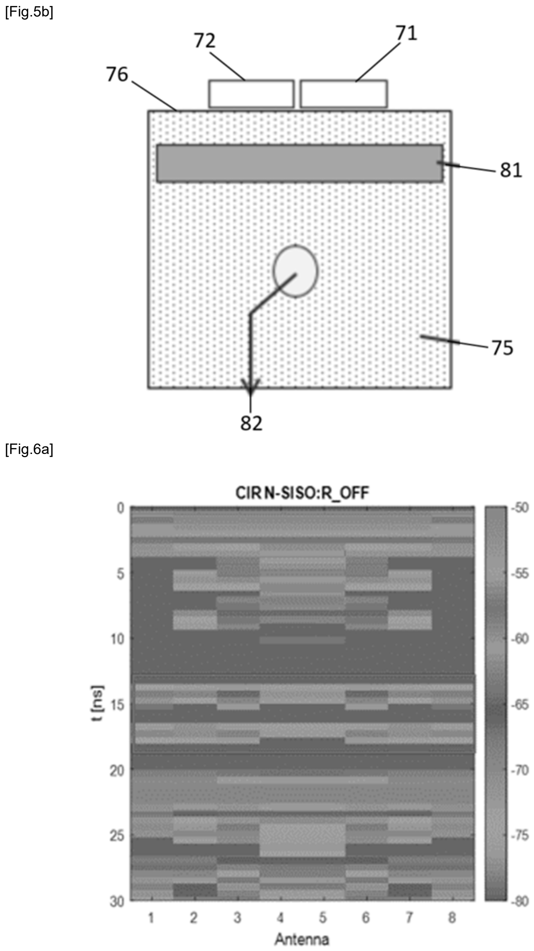

Pour ce faire et comme le montrent les figures 5a et 5b, la première boîte métallique comprenant le premier groupe 71 des huit antennes émettrices 20ₜ₁-20ₜ₈ et la deuxième boîte métallique comprenant le deuxième groupe 72 des huit antennes réceptrices 20ᵣ₁-20ᵣ₈ sont disposées côte à côte à environ 30 millimètres (mm) d'une surface 76 d'un sol 75 sableux recouvrant une plaque métallique et au sein duquel sont enfouies respectivement un premier tuyau 81 creux et comprenant une paroi en PVC et un deuxième tuyau 82 également creux et comprenant une paroi en PVC.

Une telle disposition du premier groupe 71 des huit antennes émettrices 20ₜ₁-20ₜ₈ et du deuxième groupe 72 des huit antennes réceptrices 20ᵣ₁-20ᵣ₈ permet auxdites antennes de fonctionner principalement par paire d'antenne, c'est-à-dire que le rayonnement électromagnétique incident capté par l'antenne réceptrice 20ᵣₓ correspond principalement au rayonnement électromagnétique émis par l'antenne émettrice 20ᵣₓ de même indice x (x= 1 à 8).

Le premier tuyau 81, situé à environ 200 mm de la surface 76 du sol 75, fait office de cible peu profondément enfouie, tandis que le deuxième tuyau 82, situé à environ 700 mm de la surface 76 du sol 75, fait office de cible profondément enfouie.

Le radar 70 est capable de fonctionner dans un premier mode de fonctionnement de radar dans lequel le mécanisme de commande des antennes émettrices 20ₜ₁-20ₜ₈ occupe la première position de mécanisme de commande, ou dans un deuxième mode de fonctionnement de radar dans lequel le mécanisme de commande des antennes émettrices 20ₜ₁-20ₜ₈ occupe la deuxième position de mécanisme de commande.

Pour que le radar 70 fonctionne dans le premier mode de fonctionnement de radar, on commute le mécanisme de commande de chaque antenne émettrice 20ₜ₁-20ₜ₈ sur la première position de mécanisme de commande dans laquelle chaque élément de commutation 28 occupe la première position d'élément de commutation 28.1.

Dans ce premier mode de fonctionnement de radar, les parties fonctionnelles d'antenne 21, 22 des antennes émettrices 20ₜ₁-20ₜ₈ occupent donc le premier état électrique de partie fonctionnelle dans lequel les portions résistives présentent une résistance électrique sensiblement nulle.

La partie d'excitation d'antenne 23 de chaque antenne émettrice 20ₜ₁-20ₜ₈ transmet un courant électrique alternatif impulsionnel aux parties fonctionnelles d'antenne 21, 22 de chaque antenne émettrice 20ₜ₁-20ₜ₈.

Suite à cette excitation, les parties fonctionnelles d'antenne 21, 22 de chaque antenne émettrice 20ₜ₁-20ₜ₈ émettent un rayonnement électromagnétique en particulier dirigé vers la surface 76 du sol 75.

Les parties fonctionnelles d'antenne 21, 22 de chaque antenne réceptrice 20ᵣ₁-20ᵣ₈ captent un rayonnement électromagnétique incident correspondant au rayonnement électromagnétique émis par chaque antenne émettrice 20ₜ₁-20ₜ₈.

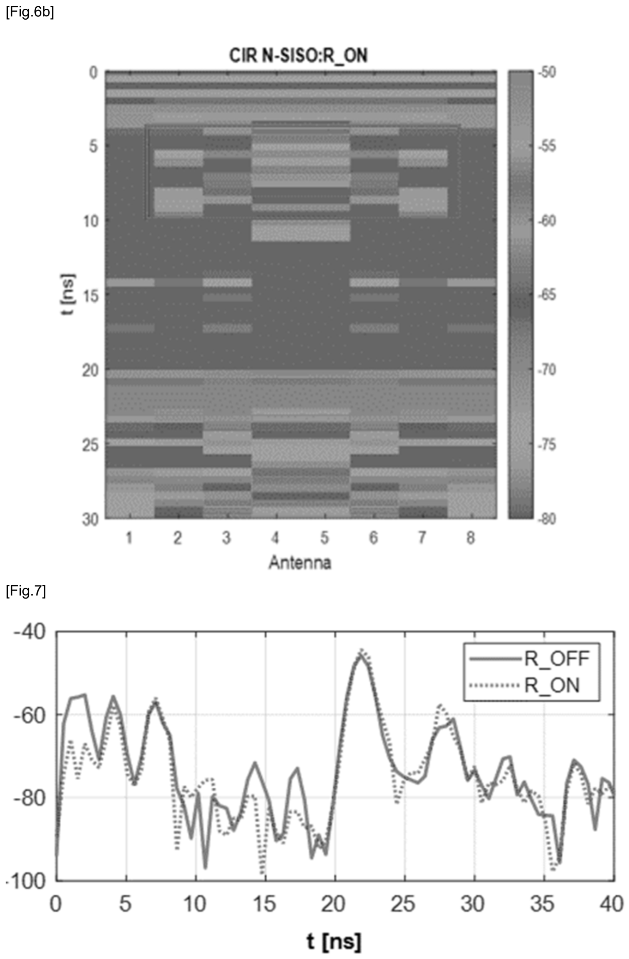

Un premier diagramme de radar (représenté à la figure 6a) est alors obtenu, ainsi qu'une première réponse impulsionnelle de chacune des antennes réceptrices 20ᵣ₁-20ᵣ₈. En particulier, la réponse impulsionnelle de l'antenne réceptrice 20ᵣ₄ est représentée en trait continu sur la figure 7.

Pour que le radar 70 fonctionne dans le deuxième mode de fonctionnement de radar, on commute le mécanisme de commande de chaque antenne émettrice 20ₜ₁-20ₜ₈ sur la deuxième position de mécanisme de commande dans laquelle chaque élément de commutation 28 occupe la deuxième position d'élément de commutation 28.2.

Dans ce deuxième mode de fonctionnement de radar, les parties fonctionnelles d'antenne 21, 22 des antennes émettrices 20ₜ₁-20ₜ₈ occupent donc le deuxième état électrique de partie fonctionnelle dans lequel les portions résistives présentent une résistance électrique élevée permettant d'atténuer le courant électrique alternatif parcourant les portions conductrices 24, 25 des antennes émettrices 20ₜ₁-20ₜ₈.

La partie d'excitation d'antenne 23 de chaque antenne émettrice 20ₜ₁-20ₜ₈ transmet à nouveau un courant électrique alternatif impulsionnel aux parties fonctionnelles d'antenne 21, 22 de chaque antenne émettrice 20ₜ₁-20ₜ₈.

Suite à cette excitation, les parties fonctionnelles d'antenne 21, 22 de chaque antenne émettrice 20ₜ₁-20ₜ₈ émettent de nouveau un rayonnement électromagnétique en particulier dirigé vers la surface 76 du sol 75.

Les parties fonctionnelles d'antenne 21, 22 de chaque antenne réceptrice 20ᵣ₁-20ᵣ₈ captent un rayonnement électromagnétique incident correspondant au rayonnement électromagnétique émis par chaque antenne émettrice 20ₜ₁-20ₜ₈.

Un deuxième diagramme de radar (représenté à la figure 6b) est alors obtenu, ainsi qu'une deuxième réponse impulsionnelle de chacune des antennes réceptrices 20ᵣ₁-20ᵣ₈. En particulier, la réponse impulsionnelle de l'antenne réceptrice 20ᵣ₄ est représentée en trait discontinu sur la figure 7.

Comme cela peut être apprécié sur les figures 6a, 6b et 7, le radar 70 est, dans le deuxième mode de fonctionnement de radar (figure 6b, réponse impulsionnelle en ligne discontinue sur la figure 7) particulièrement efficace pour détecter et identifier le premier tuyau 81 dont la paroi renvoie un premier écho reçu à environ 4 nanosecondes (ns) et un deuxième écho reçu à environ 7 ns (le rayonnement électromagnétique émis vers le bas passant en effet deux fois à travers la paroi du premier tuyau 81).

En effet, le couplage direct et l'écho de la surface du sol (reçus entre 0,7 à 2 ns) étant particulièrement atténués dans le deuxième mode de fonctionnement de radar, les deux échos produits par la paroi du premier tuyau 81 se distinguent parfaitement.

Dans le premier mode de fonctionnement de radar (figure 6a, réponse impulsionnelle en ligne continue sur la figure 7), le couplage direct et l'écho de la surface du sol sont plus intense et les échos produits par les parois du premier tuyau 81 pourraient passer inaperçus.

Cependant, le radar 70 est, dans le premier mode de fonctionnement de radar, plus efficace pour détecter et identifier le deuxième tuyau 82 dont la paroi produit deux échos reçus respectivement à environ 14 et 17 ns (il est à noter que l'écho reçu à partir de 20 ns correspond à la plaque métallique située sous le sol 75.

Il est à noter que l'invention ne se limite pas au mode de réalisation représenté sur les figures. Notamment, les éléments résistifs 31, 32, 33, 34 pourraient évidemment et sans sortir du cadre de la présente invention, être disposées différemment, et présenter d'autres valeurs de résistance électrique que celles du mode de réalisation représenté. Le radar 70 pourrait en outre fonctionner dans d'autres modes de fonctionnement de radar dans lesquels, par exemple, certains éléments de commutation 28 pourraient occuper la première position d'élément de commutation 28.1, tandis que d'autres éléments de commutation 28 occuperaient la deuxième position d'élément de commutation 28.2.

De plus, l'invention ne se limite pas aux antennes Bowtie et peut s'appliquer à d'autres types d'antennes biconiques (« *biconical antennas* » en terminologie anglaise) ainsi qu'à d'autres types d'antennes comme par exemple les antennes dipôles (« *dipole antennas* » en terminologie anglaise), les antennes de type Vivaldi, ou encore les antennes sinueuses (« *Sinuous antennas* » en terminologie anglaise), lesquelles peuvent également intégrer des charges résistives commutables (c'est-à-dire pouvant être activées ou désactivées en fonction des besoins et des applications).

Comme cela vient d'être démontré, l'antenne de l'invention peut avantageusement être utilisée au sein d'un radar de sol, mais ne se limite pas à cette application. Une telle antenne peut en effet également être utilisée au sein de tout système d'imagerie basé sur les micro-ondes, comme par exemple les radars à pulsations adaptés au domaine médical ou encore les radars utilisés dans les techniques de détection, d'inspection et d'imagerie non destructives.

## Revendications

1. Antenne (20) pour un radar, l'antenne (20) comprenant :
- une partie fonctionnelle d'antenne (21, 22) comprenant une portion conductrice (24, 25), et une portion résistive présentant une résistance électrique de portion résistive, la partie fonctionnelle d'antenne (21, 22) étant apte à occuper :
• un premier état électrique de partie fonctionnelle dans lequel la portion résistive présente une première valeur de résistance électrique de portion résistive ;
• au moins un deuxième état électrique de partie fonctionnelle dans lequel la portion résistive présente une deuxième valeur de résistance électrique de portion résistive supérieure à ladite première valeur de résistance électrique de portion résistive ;
- un mécanisme de commande apte à occuper :
• une première position de mécanisme de commande amenant la partie fonctionnelle d'antenne (21, 22) à occuper le premier état électrique de partie fonctionnelle ;
• au moins une deuxième position de mécanisme de commande amenant la partie fonctionnelle d'antenne (21, 22) à occuper l'au moins un deuxième état électrique de partie fonctionnelle.

2. Antenne (20) selon la revendication 1, dans laquelle la portion conductrice (24, 25) comprend une première sous-portion conductrice (24.1, 25.1), et une deuxième sous-portion conductrice (24.2, 25.2) reliée électriquement à la première sous-portion conductrice (24.1, 25.1).

3. Antenne (20) selon la revendication 2, dans laquelle la portion résistive comprend un premier élément résistif (31) et un deuxième élément résistif (32), le mécanisme de commande comprenant un premier élément de commutation (28) configuré pour:
- occuper une première position de premier élément de commutation (28.1) dans laquelle le premier élément de commutation dirige vers le premier élément résistif (31) un courant électrique circulant entre la première sous-portion conductrice (24.1, 25.1) et la deuxième sous-portion conductrice (24.2, 25.2) ;
- occuper une deuxième position de premier élément de commutation (28.2) dans laquelle le premier élément de commutation (28) dirige vers le deuxième élément résistif (32) ledit courant électrique circulant entre la première sous-portion conductrice (24.1, 25.1) et la deuxième sous-portion conductrice (24.2, 25.2).

4. Antenne (20) selon la revendication 2 ou la revendication 3, dans laquelle la portion conductrice (24, 25) comprend une troisième sous-portion conductrice (24.3, 25.3) reliée électriquement à la deuxième sous-portion conductrice (24.2, 25.2).

5. Antenne (20) selon la revendication 4, dans laquelle la portion résistive comprend un troisième élément résistif (33) et un quatrième élément résistif (34), le mécanisme de commande comprenant un deuxième élément de commutation (28) configuré pour:
- occuper une première position de deuxième élément de commutation (28.1) dans laquelle le deuxième élément de commutation (28) dirige vers le troisième élément résistif (33) un courant électrique circulant entre la deuxième sous-portion (24.2, 25.2) conductrice et la troisième sous-portion conductrice (24.3, 25.3);
- occuper une deuxième position de deuxième élément de commutation (28.2) dans laquelle le deuxième élément de commutation (28) dirige vers le quatrième élément résistif (34) ledit courant électrique circulant entre la deuxième sous-portion conductrice (24.2, 25.2) et la troisième sous-portion conductrice (24.3, 25.3).

6. Antenne (20) selon l'une des revendications précédentes, comprenant une partie d'excitation d'antenne (23) apte à transmettre un courant électrique à la partie fonctionnelle d'antenne (21, 22).

7. Antenne (28) selon la revendication 6, dans laquelle, lorsque la partie d'excitation d'antenne (23) transmet un courant électrique à la partie fonctionnelle d'antenne (21, 22), la portion conductrice (24, 25) est parcourue par un courant électrique et la partie fonctionnelle d'antenne (21, 22) est configurée pour émettre un rayonnement électromagnétique.

8. Antenne (20) selon l'une des revendications 1 à 7, dans laquelle la partie fonctionnelle d'antenne est configurée pour capter un rayonnement électromagnétique incident et pour convertir ledit rayonnement électromagnétique incident en un courant électrique parcourant la portion conductrice.

9. Radar (70) comprenant au moins une antenne (20) selon l'une des revendications 1 à 8 et étant apte à fonctionner dans :
- un premier mode de fonctionnement de radar dans lequel la partie fonctionnelle d'antenne (21, 22) occupe le premier état électrique de partie fonctionnelle ;
- au moins un deuxième mode de fonctionnement de radar dans lequel la partie fonctionnelle d'antenne (21, 22) occupe l'au moins un deuxième état électrique de partie fonctionnelle.

10. Radar (70) selon la revendications 9, comprenant au moins une première antenne (20ₜ₁-20ₜ₈) et une deuxième antenne (20ᵣ₁-20ᵣ₈) conformes à l'une des revendications 1 à 8, le radar étant un radar de sol.

11. Procédé de fonctionnement d'un radar (70) conforme à la revendication 10, le procédé comprenant :
- une étape de commutation du mécanisme de commande de l'au moins une première antenne (20ₜ₁-20ₜ₈) sur la première position de mécanisme de commande ou sur l'au moins une deuxième position de mécanisme de commande ;
- une étape d'excitation, mise en œuvre par la partie d'excitation d'antenne (23) de l'au moins une première antenne (20ₜ₁-20ₜ₈), de la partie fonctionnelle d'antenne (21, 22) de l'au moins une première antenne (20ₜ₁-20ₜ₈) ;
- une étape d'émission, mise en œuvre par la partie fonctionnelle d'antenne (21, 22) de l'au moins une première antenne (20ₜ₁-20ₜ₈) , d'un rayonnement électromagnétique ;
- une étape de détection, mise en œuvre par la partie fonctionnelle d'antenne (21, 22) de l'au moins une deuxième antenne (20ᵣ₁-20ᵣ₈), d'un rayonnement électromagnétique incident.
